Europäisches Patentamt

European Patent Office

Office européen des brevets

(11) Publication number: **0 065 613**
**B1**

## (12) EUROPEAN PATENT SPECIFICATION

(45) Date of publication of patent specification: **14.08.85**

(21) Application number: **82100172.4**

(22) Date of filing: **12.01.82**

(51) Int. Cl.⁴: **G 21 C 3/34**

(54) Fuel pin support grid.

(30) Priority: **14.05.81 US 263668**

(43) Date of publication of application:
**01.12.82 Bulletin 82/48**

(45) Publication of the grant of the patent:
**14.08.85 Bulletin 85/33**

(84) Designated Contracting States:
**BE DE FR GB IT NL**

(56) References cited:
**DE-A-1 514 559**
**GB-A-1 303 836**
**GB-A-1 362 681**
**GB-A-1 544 719**

(73) Proprietor: **WESTINGHOUSE ELECTRIC
CORPORATION**
**Westinghouse Building Gateway Center
Pittsburgh Pennsylvania 15222 (US)**

(72) Inventor: **Downs, Robert Edward**
**1034 Harvard Road**
**Monroeville Pennsylvania (US)**

(74) Representative: **Fleuchaus, Leo, Dipl.-Ing. et al
Fleuchaus & Wehser Melchiorstrasse 42
D-8000 München 71 (DE)**

Courier Press, Leamington Spa, England.

## Description

The invention was conceived during performance of a contract with the United States Government designated DE—AM02-76CH94000.

This invention relates to a support grid for triangular arrays of nuclear fuel rods in nuclear fuel assemblies.

Most nuclear reactor cores consist of a grouping of fuel assemblies. Each fuel assembly comprise long cylindrical fuel rods which are arranged and supported by fuel rod support grids spaced axially at intervals along the assembly. GB—A—1 362 681 describes a fuel rod support and spacer grid consisting of interconnected strips so as to arrange the fuel rods in a rectangular array. The strips are provided with corresponding slots for rectangular intersection, with all points of intersection being welded and the strips are dimpled to form rigid stops for the fuel rods.

Recent nuclear reactor designs specify fuel assemblies of hexagonal cross-section, with fuel rods arranged in a triangular array defined herein as a geometric pattern of rods in which three imaginary lines joining the centers of any three mutually adjacent rods in the assembly form an equilateral triangle. The triangular array is repetitious such that the family of all imaginary triangles formed by the centers of all possible groups of three mutually adjacent rods in the assembly is·a family of congruent equilateral triangles.

In a present triangular fuel rod array a grid is an assembly of two layers of parallel criss-crossing straps. The straps are welded at each intersection to form a single grid which, however, provides for relatively wide spacing of the fuel rods.

Furthermore grids are usually provided with dimples or corrugations supporting the fuel rods.

As reactor designs specify fuel rod assemblies of closer fuel rod spacings to achieve improved nuclear characteristics, the line-of-sight space between rods becomes smaller, or even non-existent making the problem of dimple installation more difficult. The strap becomes necessarily very thin and the small joining welds between straps become small and weak. The resulting grid is flimsy.

Consequently, it is the principal object of the present invention to provide a grid which can be used with very closely spaced rod clusters while providing sufficient strength and also room for dimples.

With this object in view the present invention resides in a grid for the support and alignment of fuel rods in a hexagonal fuel assembly with a triangular array of rods for a nuclear reactor, said grid having upper and lower layers of intersecting interconnected straps, characterized in that said straps are corrugated and disposed in such a manner that in the areas of intersection, said lower and upper straps extend in the same plane and are disposed in juxtaposition so that they are in line contact providing abutments for a line contact at each intersection of said upper and lower layer straps along which line contact said upper and lower straps are welded together.

Assembly of the grid may be done using a plate with slots receiving the straps prior to welding. Since then, cell size is determined by the plate, manufacturing errors in the size of corrugations of straps do not accumulate across the grid.

The grid is assembled using uniform strap which is cut to appropriate lengths to form the necessary pieces for the grid. All grid straps are relatively large and will not be difficult to handle or hazardous to reactor operation as very small straps could be.

The invention will become more readily apparent from the following description of a preferred embodiment thereof shown, by way of example only, in the accompanying drawings, wherein:

Figure 1 is a plan view of the corrugated strap grid;

Figure 2 is a schematic of the grid in a first embodiment;

Figure 3 is a schematic of the grid in a second embodiment;

Figure 4 is a pictorial view of a section of a grid showing a guide tab; and

Figures 5 to 8 are views of guide tabs.

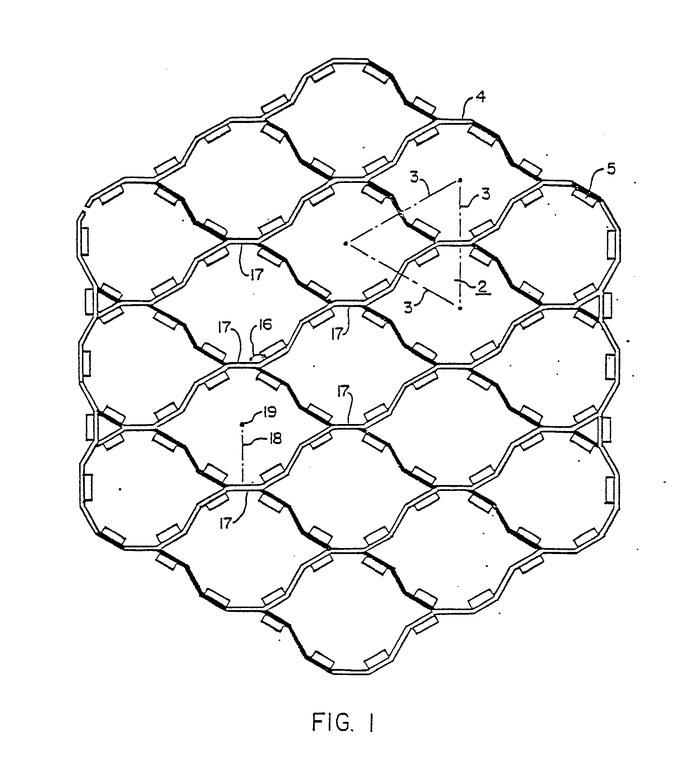

Figure 1 shows a hexagonal grid for a triangular array of rods. The triangular array definition is illustrated in this drawing by inclusion of three rod-center to rod-center imaginary lines 3 to form an equilateral triangle 2. While this triangle 2 is shown in only one position, in fact any set of three mutually adjacent rod sites so joined by imaginary lines will form a triangle congruent to triangle 2.

The bends and turns in the strap 4 in Figure 1 are corrugations, which enable the grid to accommodate closely spaced arrays, even those having no line-of-sight between rods. The corrugations also provide for room for dimples 5.

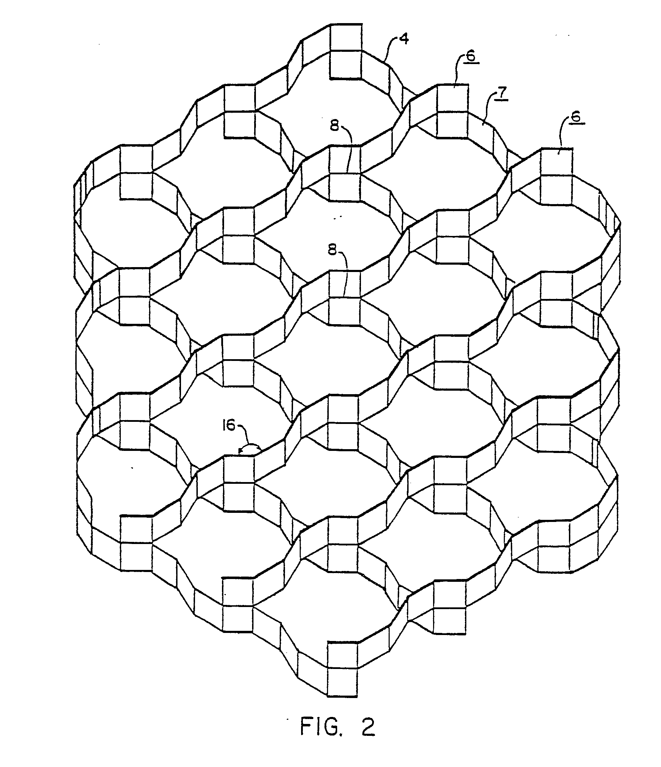

Referring to Figure 2, this schematic of the first embodiment shows an upper layer 6 of parallel strap 4 and a lower layer 7. At locations in the grid where straps 4 cross, edges of strap corrugations abut. These abutments, identified by reference number 8, are sites for linear welds. Abutments 8 of the strap occur without overlap of strap 4 which would double strap thickness thereby decreasing available room between rods and restricting coolant flow through the grid.

The angle 16 of corrugation is chosen to be 30° in the first (and second) embodiment because this angle results in the sections of each strap which abut (see section 17 in Figure 1) being 90° to an imaginary line 18 between fuel rod centers 19. This is advantageous since surface contact between sections 17 is thereby maximized and small tolerance errors in corrugation angles can be best accommodated.

The cell shape shown in Figure 1 is chosen since dimples 5 can be located in an opposed configuration with 120° being the largest angle between any two dimples 5. This provides good support to the fuel rod.

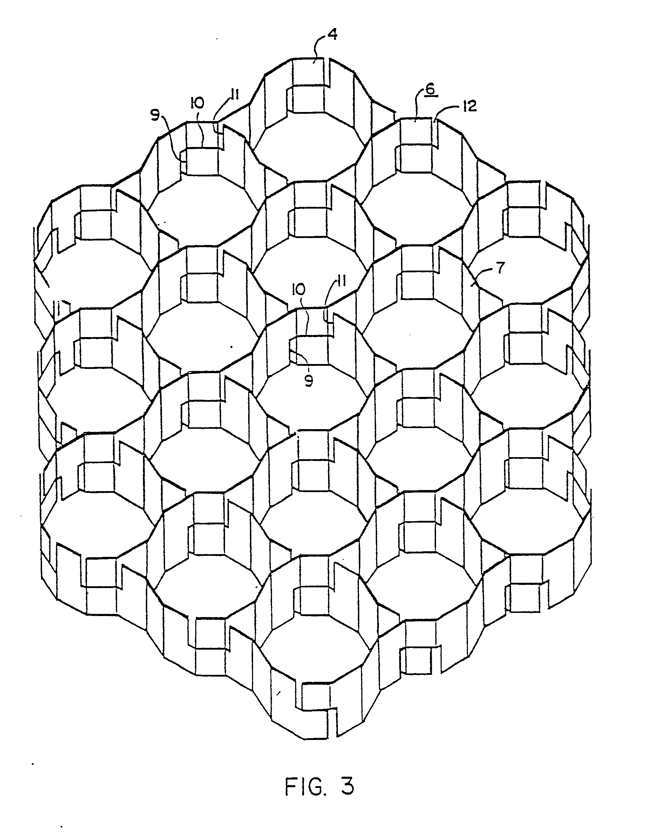

A second embodiment is illustrated in Figure 3 which again has an upper layer 6 of parallel straps 4 and a lower layer 7. In this embodiment, sections of each strap have been cut away, allowing mesh of both layers. Mesh of the layers 6 and 7 creates three line contact weld sites between straps 4 along edges 9, 10 and 11 at every strap intersection.

For purposes of clarity, large gaps 12 have been shown in Figure 3 which in practice may be of minimized size to provide, perhaps, even affirmative contact.

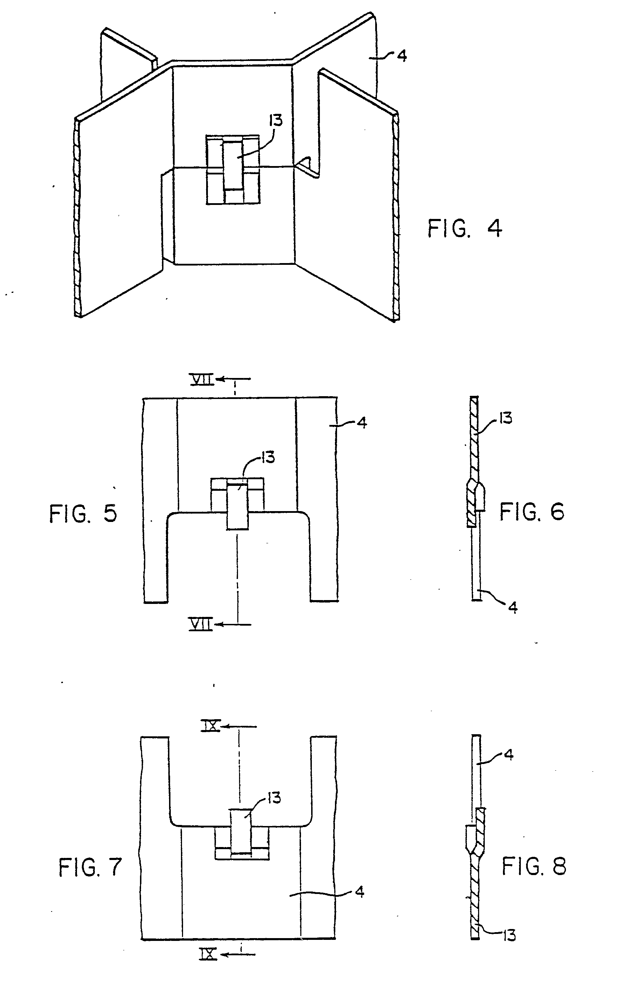

As a refinement to either the first or second embodiments, straps 4 may have guide tabs 13 as shown in Figures 4 to 8, to guide, support and align straps 4 during grid assembly and welding. Tabs 13 provide positive engagement of abutting corrugations at all or some of these adjoining edges. When used with cutout straps 4 of the second embodiment, these tabs 13 will enable gaps 12 to be somewhat larger, providing a looser fit of the strap mesh.

Both embodiments, alone or with guide tabs, provide a grid which is of improved strength due to increased weld length. The second embodiment and the guide tabs provide additional strength due to mechanical interaction.

## Claims

1. A grid for the support and alignment of fuel rods in a hexagonal fuel assembly with a triangular array of rods for a nuclear reactor, said grid having upper and lower layers (6, 7) of intersecting interconnected straps, characterized in that said straps (6, 7) are corrugated and disposed in such a manner that in the areas of intersection, said lower and upper straps (6, 7) extend in the same plane and are disposed in juxtaposition so that they are in line contact providing abutments (8) for a line contact at each intersection of said upper and lower layer straps (6, 7) along which line contact said upper and lower straps (6, 7) are welded together.

2. A grid as claimed in claim 1, characterized in that said corrugated straps (6, 7) have cut-out sections adapted to cause the corrugations of said upper layer straps (6) to align in juxtaposition with and abut to corrugations of said lower layer straps (7) and to cause said layers of straps (6, 7) to mesh, providing a three line contact between said straps at each intersection of said upper and lower straps along which three line contact said upper and lower straps are welded together.

3. A grid as claimed in claim 1 or 2, characterized by guide tabs (13) for positively guiding the straps of said upper and lower strap layers (6, 7) into abutment with each other and positively supporting said straps (6, 7) in said abutment during a welding operation, said guide tabs (13) being located at the site of juxtaposition of corrugations of at least one upper and lower strap intersection.

4. A grid as claimed in that said corrugation straps (6, 7) have angles of corrugation of 30°.

## Patentansprüche

1. Gitter zum Haltern und Ausrichten von Kernbrennstäben eines hexagonalen Brennelements mit einem dreieckigen Feld von Stäben in einem Kernreaktor, wobei das Gitter obere und untere Schichten von sich kreuzenden, miteinander verbundenen Bändern (6, 7) aufweist, dadurch gekennzeichnet, daß die Bänder (6,7) mehrfach geknickt und so angeordnet sind, daß die oberen und unteren Bänder in den Bereichen, in denen sie sich schneiden, in der gleichen Ebene und so aneinander liegen, daß sie einen Kontakt längs einer Linie bilden und aneinanderstoßende Flächen (8) enstehen, die einen Linienkontakt bei jedem Zusammentreffen der oberen und unteren Bänder (6, 7) bilden, längs dessen die oberen und unteren Bänder zusammengeschweißt werden.

2. Gitter nach Anspruch 1, dadurch gekennzeichnet, daß die geknickten Bänder (6, 7) ausgeschnittene Bereiche aufweisen, mit denen die Knickbereiche der Bänder (6) in der oberen Schicht anstoßend neben die Knickbereiche der Bänder (7) in der unteren Schicht gebracht werden, so daß die Schichten der Bänder (6, 7) vermaschen und einen Kontakt längs dreier Linien zwischen den Bändern bei jedem Zusammentreffen der oberen und der unteren Schicht erzeugen die oberen und unteren Bänder längs der drei Kontaktlinien zusammengeschweißt werden.

3. Gitter nach Anspruch 1 oder 2, gekennzeichnet durch Führungsnasen (13), mit denen die Bänder der oberen und der unteren Schicht von Bändern (6, 7) zum gegenseitigen Kontakt geführt werden und mit denen die Bänder (6, 7) während des Schweißvorgangs gehaltert und in Kontakt gehalten werden, wobei die Führungsnasen (13) an der Stelle angeordnet sind, an der die Knickbereiche bei mindestens einem Zusammentreffen der oberen und unteren Bänder gegeneinanderstoßen.

4. Gitter nach Anspruch 1 oder 2 oder 3, dadurch gekennzeichnet, daß die geknickten Bänder (6, 7) Knickwinkel von 30° aufweisen.

## Revendications

1. Grille d'espacement et d'alignement de barres de combustible dans un assemblage combustible hexagonal avec un réseau triangulaire de barres destinées à un réacteur nucléaire, ladite grille comprenant des couches supérieures et inférieures (6, 7) de bandes interconnectées qui se croisent, caractérisée en ce que lesdites bandes (6, 7) sont ondulées et disposées de façon que dans les zones d'intersection, les bandes inférieures et supérieures (6, 7) soient situées dans le même plan et soient juxtaposées si bien qu'elles sont en contact linéaire en formant des zones de butée (8) en vue d'un contact linéaire à chaque intersection des bandes supérieures et des bandes inférieures (6, 7), ces bandes supérieures et inférieures (6, 7) étant soudées le long de ce contact linéaire.

2. Grille selon la revendication 1, caractérisée par le fait que lesdites bandes ondulées (6, 7) ont des parties découpées permettant aux ondulations des bandes de couche supérieure (6) de s'aligner en juxtaposition avec les ondulations des bandes de couche inférieure (7) et de buter contre elles, et de faire engréner lesdites couches des bandes (6, 7) en constituant entre les bandes, à chaque intersection des bandes supérieures et inférieures, un contact suivant trois lignes le long desquelles lesdites bandes supérieures et inférieures sont soudées ensemble.

3. Grille selon l'une des revendications 1 ou 2, caractérisée par le fait qu'elle comprend des pattes de guidage (13) destinées à guider positivement les bandes des couches de bandes supérieures et inférieures (6, 7) pour les amener en butée les unes avec les autres et à soutenir positivement lesdites bandes (6, 7) en butée pendant une opération de soudage, lesdites pattes de guidage (13) étant situées à endroit de la juxtaposition des ondulations d'au moins une intersection de bande supérieure et de bande inférieure.

4. Grille selon l'une des revendications 1, 2 ou 3, caractérisée par le fait que les bandes ondulées (6, 7) ont des angles d'ondulation de 30°.

FIG. I

FIG. 2

FIG. 3

0 065 613

FIG. 4

FIG. 5

FIG. 6

FIG. 7

FIG. 8